# EUROPEAN PATENT APPLICATION

(11) **EP 0 642 074 A1**
(43) Date of publication of application: **08.03.1995**
(21) Application number: 94480076.2
(22) Date of filing: 11.08.1994
(51) Int. Cl.: G06F 1/32

(54) **Method and apparatus for a timer integrated power management element**

(30) Priority: 08.09.1993 US 118072
(71) Applicant: International Business Machines Corporation, Armonk, N.Y. 10504 (US)
(72) Inventor: Shrikant, N. Parikh, Mesquite, TX 75150 (US)
(74) Representative: Lattard, Nicole

(57) **Abstract**

A power management device (PMAN) is installed between a power supply and an electrical subcomponent of an electrical device. A predetermined signal characteristic from the electrical device to the subcomponent is constantly monitored by the PMAN. Based upon a status of the predetermined characteristic, power is provided by the power supply to the subcomponent. A timer provides at least one required signal. In one embodiment, the timer signals the device that the subcomponent is powered. In another embodiment, a timer signals a memory device to substitute output for the subcomponent while shutting off power to the subcomponent. The electrical device is not affected by the powering off of the subcomponent after an initial capture of the subcomponent's output. The electrical device operates the same with the PMAN as without the PMAN, therefore, little or no design changes are required to the existing device. The PMAN allows a highly distributed power usage management capability.

## Description

This invention relates in general to power management, and in particular to a method and apparatus for managing power in portable computers to lengthen the life of the battery.

The management and conservation of power are some of the fundamental issues in the design of hardware/electrical systems. In particular, with the advent of portable/laptop computers as well as many battery powered devices, the life of the battery used therein often determines the actual value of the device. For example, there would be little value in a portable laptop computer or a video camera that could only operate for five or ten minutes on a single battery charge.

Therefore, it is advantageous to provide power management to these electronic devices in order to ensure that only the minimum amount of energy is used and only when needed. It is known in the art to provide electronic devices with monitoring systems to detect prolonged periods of inactivity. Upon the expiration of a predetermined amount of time with no activity, a monitoring system will shut the power off for the entire device. Such a monitoring system is of value in that power is not wasted by allowing the electronic device to remain on when there is no need for a power on condition. An example of such a device can be found in many battery powered calculators currently in use.

In addition, there are power management systems which monitor various subcomponents of portable computers in order to ensure that only the currently required subcomponents are provided with power. These systems generally monitor demand for a given clock frequency, and power is shut off to a subcomponent when there is no demand therefrom.

Power management can be conducted by hardware (such as a simple time delay switch), software or a combination of hardware and software. Regardless of how power is managed, it is generally managed on a centralized basis. Since electronic devices are made up of a plurality of components and/or circuits (including integrated circuits) it is desirable to provide power management to individual components and/or circuits. With such a decentralized power management, it would be possible to shut off individual components and/or circuits when not being utilized. Thus, even if the electronic device is being operated, power can be managed and saved by providing power only to those components that are required for operation. Thus, there is a need for a method and apparatus for providing a just in time, fine grain, flexible power management element.

### Summary of The Invention

The present invention provides a method and apparatus for a timer integrated power management element in electrical devices which substantially eliminates or reduces problems in the prior art. The present invention may allow decentralized power management down to each subcomponent of the electrical device.

In accordance with one aspect of the present invention, a timer is integrated into a power management element. In one embodiment, the timer serves to provide a signal to an electrical device that the subcomponent is powered. In another embodiment, the timer shuts power off to the subcomponent and signals a memory device to substitute output for the subcomponent.

The present invention provides the technical advantage of decentralized power management. No software or central processor is needed, as in the prior art, to manage power and thus a finer level of control is possible. It is a further technical advantage of the present invention that no design change of the device is required.

### Brief Description of The Drawings

For a more complete understanding of the present invention and the advantages thereof, reference is now made to the Detailed Description taken in conjunction with the attached Drawings, in which:
Figure 1 is a schematic illustration of the use of a power management device in accordance with the present invention;
Figure 2 is a diagram illustrating an embodiment of a power management device;
Figure 3 is a diagram of one embodiment of a circuit within the power management device of Figure 2;
Figure 4 is a diagram of a modification to the device of Figure 2 encompassing one embodiment of the present invention; and
Figure 5 is a diagram of a modification to the device of Figure 2 encompassing another embodiment of the present invention.

### Detailed Description of The Invention

The essence of the invention disclosed herein is the ability to turn power off to that part of a circuit or device which is currently not in use. The invention disclosed herein adopts a decentralized but highly versatile approach to power management wherein power is provided on a just in time (i.e., no sooner or later than needed) basis. A special device referred to herein as PMAN (Power Management Device) employs power management with very low granularity. By using the present invention, a device designer may selectively employ power management for sections or subsections of circuits used in the device however small they may be (such as an integrated circuit chip). The fundamental premise herein is that there are sections of a circuit which will not be in use for some period of time while the circuit or the device in which the circuit appears is in operation. That part of the circuit not being used may be turned off until needed. The present invention assumes that turning off parts of circuits will not adversely impact functioning of the rest of the circuitry which needs to be on.

For the sake of convenience, the following terminology will be used: 1) an electrical device means any device which requires the use of electrical subcomponents thereof on a recurring but less than continuous basis; and 2) an electrical subcomponent means any component which is part of a larger device requiring the use thereof. For example only, an electrical device may comprise a portable computer, a video camera, an electronic circuit, an integrated circuit chip, etc. Also for example only, an electrical subcomponent may comprise a computer disk drive, a microprocessor, a CMOS chip, a group of interconnected integrated circuits, an electronic circuit, and etc. Thus, it can be seen that some electrical devices may also be subcomponents and vice versa.

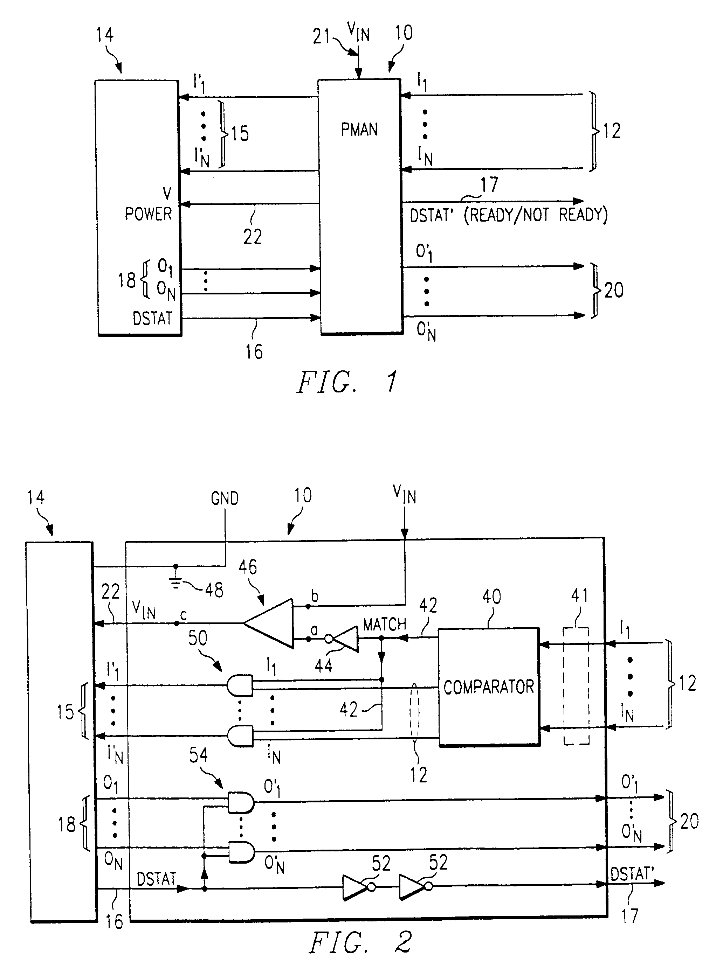

Referring to Figure 1, a schematic illustration of a PMAN 10 is shown in use. PMAN 10 monitors incoming signals I1...IN (generally indicated by the reference numeral 12) from an electrical device (not shown) to an electrical subcomponent 14 thereof for a predetermined characteristic (or characteristics) which is determined by patterns of usage when the device is in use. If the predetermined characteristic is detected such as, for example, if any of the incoming signals 12 change from high impedance to either a low or high level of activity, PMAN 10 will pass incoming signals I'1...I'N (generally indicated by the reference numeral 15) and turn on power to the subcomponent 14. The subcomponent 14 will typically experience some amount of delay after power is provided thereto until becoming fully operational. This delay will vary from subcomponent to subcomponent and will approximate the normal power on and initialization time for the subcomponent. It is important to note that the characteristic being monitored is not a special command created for use by PMAN 10 from some type of central processor. PMAN 10 monitors the existing signals in the device for changes (characteristics) that already occur. Therefore, no changes are necessary to the existing device or subcomponent due to the addition of PMAN 10, and the device will operate the same with or without PMAN 10.

Upon reaching a fully operational ready state, the subcomponent 14 may set a signal line, DSTAT 16, to inform the PMAN 10 of the ready state of the subcomponent 14. Upon detection of a ready state of the subcomponent 14 from DSTAT 16, the PMAN 10 allows output signals O1...ON (generally indicated by the reference numeral 18) to be passed through PMAN 10 to the rest of the electrical device as output signals O'1...O'N (generally indicated by the reference numeral 20).

The status of subcomponent 14 is signalled to PMAN 10 by the signal DSTAT 16 and to the rest of the electrical device by a signal DSTAT' 17. Upon sensing a ready state from DSTAT' 17, the output signals 20 can be read as required by the electrical device. The DSTAT' 17 is important from the standpoint that initialization times may vary drastically from subcomponent to subcomponent. For example, the initialization time for a computer disk drive may be on the order of several seconds, a microprocessor may be on the order of several hundred microseconds, and a single small CMOS (complementary metal-oxide semiconductor) chip may be on the order of several hundred nanoseconds. PMAN 10 may include a latch to capture the input signals 12, hold and provide them to the subcomponent 14 when the subcomponent 14 is initialized and ready to receive them. As an alternative, PMAN 10 may hold the input signals 12 active until the DSTAT 16 indicates that the subcomponent 14 is initialized.

It is important to note that a certain amount of delay will be required to turn on the subcomponent 14 with which PMAN 10 is used. To obtain power at subcomponent 14, power in, as generally indicated by the reference numeral 21, must pass through the PMAN 10. If the incoming signals 12 indicate that the subcomponent 14 needs to be activated, incoming power 21 will pass through the PMAN 10 and be delivered to the subcomponent 14, as generally indicated by the reference numeral 22.

Referring to Figure 2, one possible arrangement (as disclosed in the heretofore U.S. Patent Application serial number 08/071,793 filed by Applicant herein and assigned to a common assignee) for the conveyance of power 21 and 22 through the PMAN 10 to the subcomponent 14 is illustrated in greater detail. The incoming signals 12 are passed through a comparator 40 which may be, for example, a differential amplifier. The comparator 40 evaluates the incoming signals 12 for a predetermined characteristic(s) such as, for example, any change from a high impedance state to an active state (either low or high levels of activity). A match (i.e., detection of the characteristic) indicates that there is a need for use of the subcomponent 14 by the electrical device, and a match signal 42 is transmitted from the comparator 40. The match signal 42 then passes through an inverter 44 and then into a circuit 46, which will be subsequently described in greater detail. The circuit 46 allows the incoming power 21 to be turned on/off to the subcomponent 14. As a result of the match signal 42 entering the circuit 46, the incoming power 21 would be turned on to the subcomponent 14. Without the match signal 42, the device 46 prevents the incoming power 21 from being passed to the subcomponent 14. A ground 48 is provided for the PMAN 10.

The incoming signals 12 also enter the comparator 40 and pass therethrough with the match signal 42. The incoming signals 12 and the match signal 42 then enter AND gates 50. The incoming signals 15 may then be passed to the subcomponent 14.

When the subcomponent 14 has been provided with power 22 and sufficient time has passed to allow the subcomponent 14 to fully power up, the DSTAT 16 is transmitted therefrom into the PMAN 10. The DSTAT 16 may pass through inverters 52 before being transmitted to the electrical device. When the DSTAT 16 indicates a ready state, the output signals 18 are allowed to pass through AND gates 54 (when combined with DSTAT 16) and on to the electrical device as output signals 20. As previously mentioned above, the PMAN 10 may include a latch 41 to capture the input signals 12, hold and provide them to subcomponent 14 when the subcomponent 14 is initialized and ready to receive them. As an alternative, the input signals 12 may be held active until the DSTAT 16 indicates that subcomponent 14 is in a ready state.

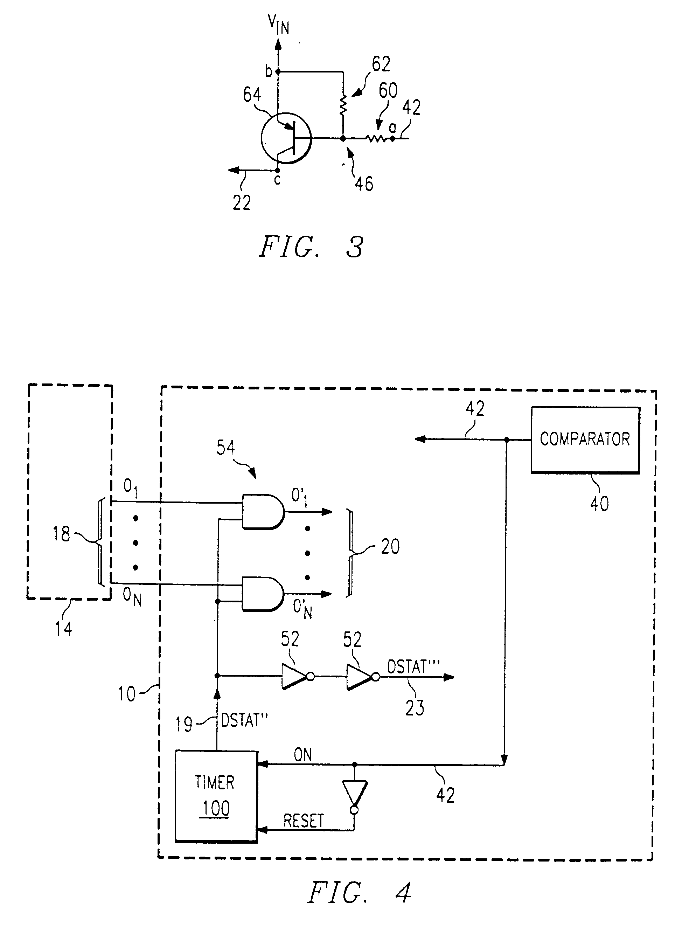

Referring to Figure 3, one example of the device 46 is illustrated in greater detail. The match signal 42 enters the device 46 at (a). The device 46 may comprise a first resistor 60, a second resistor 62, and a pnp transistor 64. The size and type of resistors 60 and 62 may vary depending upon the transistor 64. Thus, the match signal 42 enters the device 46 at (a) while the incoming power 21 enters at (b). Only when the match signal 42 is provided, will the device 46 allow the incoming power 21 to pass therethrough and on to the subcomponent 14 through (c). It is to be understood that the illustration of the device 46 shown in Figure 3 is but one example. The device 46 could also comprise other devices such as, for example, a solid state relay.

The PMAN 10, as shown in Figure 2, may be enhanced with the addition of programmability through a PLA (Programmable Logic Array) or discrete logic to the computer. It would then be possible to program each PMAN differently, as programmability would allow the specification of the exact logical state(s) of each of the incoming signals which is required to turn power on for the managed device. With programmability, the incoming signals do not need to reach a high impedance state to turn power off to the managed device.

As discussed herein, all circuitry and DSTAT signals are based on positive logic, i.e., a high state means logical 1 and a low state means logical 0. It is to be understood that appropriate changes to the circuitry would be necessary for other then positive logic conditions.

In accordance with one embodiment of the present invention, Figure 4 illustrates an improvement to the PMAN 10 as shown in Figure 2. A timer 100 is added to the PMAN 10 to issue a DSTAT'' 19 signal after a predefined period of time. The DSTAT'' 19 signal is produced by the timer 100 in lieu of a DSTAT 16 signal from the subcomponent 14, as previously described above in relation to Figure 2. Upon issuance of a match signal 42 from the comparator 40, as previously described above, the signal 42 is also sent to the timer 100. Upon receipt of the match signal 42, the timer 100 is started. After a predetermined amount of time (typically the power up time of the particular subcomponent 14) the timer 100 will issue the DSTAT'' 19 signal. If no match signal 42 is received, the timer 100 will reset (no DSTAT'' 19 signal will issue, i.e., the subcomponent 14 is not needed). The DSTAT'' 19 signal is sent to AND gates 54 and inverters 52 in lieu of the DSTAT 16 signal, as previously described above. After passing through the inverters 52, a DSTAT''' 23 signal is sent to the requesting electrical device in lieu of the DSTAT' 17.

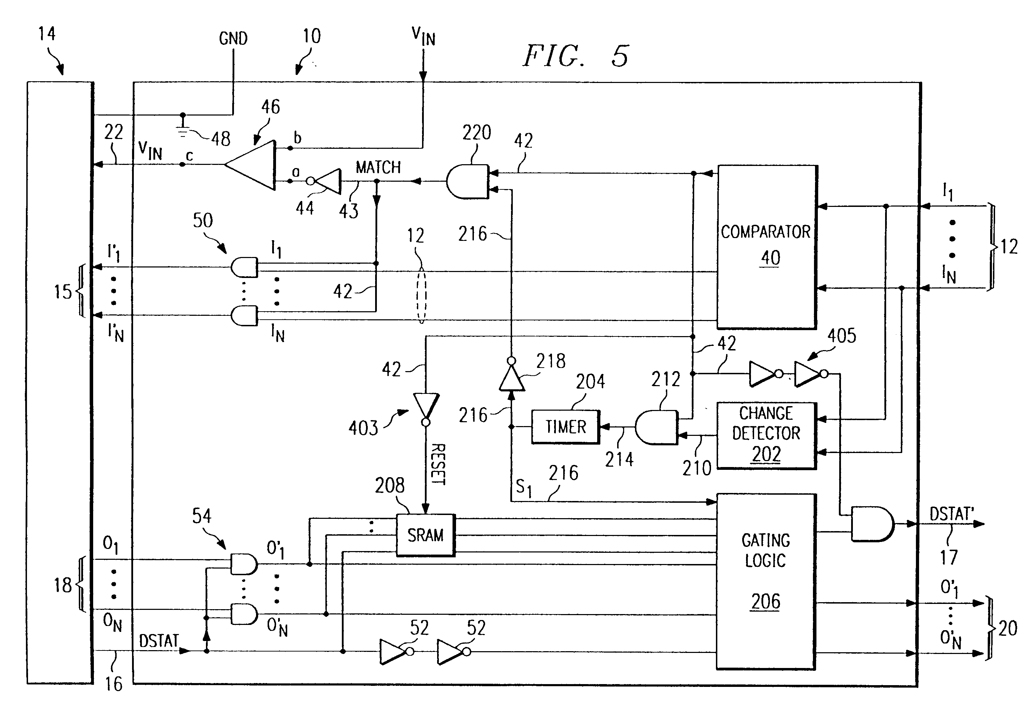

Referring to Figure 5, another improvement to the PMAN 10 of Figure 2 is illustrated. The PMAN 10 is provided with a timer 204 for use with a subcomponent 14 which provides the same output for the same input. Also included are a change detector 202, a gating logic 206, and an SRAM 208. The change detector 202 receives the same input signals I1...IN from the electronic device (not shown) as does the comparator 40, as previously described above. Whenever a change in the input signals 12 is detected by the change detector 202, a short duration pulse 210 is transmitted therefrom. In conjunction with the pulse 210, if a match signal 42 is transmitted from the comparator 40 (indicating a request for output from the subcomponent 14), the match signal 42 and the change signal 210 then go through AND gate 212 resulting in an ON signal 214 being passed to the timer 204. The ON signal 214 resets and starts the timer 204 running for a predetermined amount of time. The amount of time the timer 204 runs depends upon the startup time of the subcomponent 14.

While the timer 204 is running for the predetermined amount of time, an output signal 216 is transmitted therefrom to an inverter 218 and then to AND gate 220. The output signal 216, in conjunction with the match signal 42, pass through the AND gate 220 and create match signal 43 which then proceeds through inverter 44 and circuit 46 as previously described above with reference to Figure 2. Once the subcomponent 14 has been powered up and output signals 18 are produced, the SRAM 208 records the output therefrom as well as the DSTAT 16. While the timer 204 is still running, the subcomponent 14 will remain powered and output therefrom will be passed to the electrical device as output signals 20 and DSTAT' 17, as previously described above in conjunction with Figure 2 after passing through the gating logic 206. The gating logic 206, as is known in the art, transmits the correct set of output to the device from SRAM 208 or the subcomponent 14, depending upon the output signal 216 from the timer 204. However, once the timer 204 expires (indicating that no change in the input signal has been detected in the last X units of time (where X indicates time needed to power up the subcomponent 14 depending on usage characteristics of the subcomponent)) the signal 216 indicates that the subcomponent 14 is to be powered off and a continuation of the output signals 20 and DSTAT' 17 will be read from the memory of SRAM 208 rather than directly from the subcomponent 14. Thus, the subcomponent 14 will not need to be powered to continue to produce the same output for the same input. The electrical device continues to receive a correct set of outputs even though the subcomponent 14 is off. If no match signal 42 is detected, the SRAM 208 is cleared via branch 403 to prevent transmission of unnecessary output as well as to provide space for the next requested output. Similarly, if no match signal 42 is detected, DSTAT' 17 is disabled via branch 405.

The present invention provides an advantage over the use of software as known in the art to manage power usage. Software techniques require the use of a central processor/microprocessor/microcontroller. In contrast, the present invention can potentially be used with any electrical circuit, analog or digital. In contrast with the software based power management schemes, the present invention is more able to achieve practically instantaneous switching times with very fine grain power management. The power on/off status occurs without the knowledge of or explicit actions from the rest of the electrical device. However, the designer will need to be aware of the fact that some circuits must be kept on constantly (i.e., a DRAM) as well as the fact that there may be some delay before a managed subcomponent is fully operational. This time delay will essentially be a power versus time trade-off and the designer will need to make the decision if the electrical device can accommodate such delay.

The present invention is adaptable to a wide range of designs. The PMAN may be integrated into current technology devices with minimal change, as the logic of the existing circuitry does not need to be changed. Although not shown, it is to be understood that the timer 100 of Fig. 4 and the timer 204 of Fig. 5 could be used together in conjunction with the same PMAN 10.

## Claims

1. An improved method of decentralizing power usage management in an electrical subcomponent of an electrical device, comprising the steps of:
powering the subcomponent upon detection of at least one predetermined characteristic of at least one incoming signal to the subcomponent from the electrical device; and ;
informing the device with a signal generated by a timer after a predetermined period of time that the subcomponent is powered, wherein power is provided to and used by the subcomponent only when the electrical device needs the subcomponent.

2. A method of decentralizing power usage management in an electrical subcomponent of an electrical device, comprising the steps of:
powering the subcomponent upon receipt from the electrical device of a request for output;
storing output from the subcomponent in a storage device;
turning power to the subcomponent off after a predetermined amount of time in which no change is detected to said request for the output; and
providing said output to the electrical device from said storage device.

3. An apparatus for decentralizing power usage management in an electrical subcomponent of an electrical device, comprising:
means for powering the subcomponent upon receipt from the electrical device of a request for output;
means for storing output from the subcomponent in a storage device;
means for turning power to the subcomponent off after a predetermined amount of time in which no change is detected to said request for the output; and
means for providing said output to the electrical device from said storage device.

4. The apparatus of Claim 3, wherein said means for storing comprises:
an SRAM.

5. The apparatus of Claim 3, wherein said means for turning power to the subcomponent off comprises:
a timer.
